# EUROPEAN PATENT SPECIFICATION

(11) **EP 3 473 106 B1**
(45) Date of publication and mention of the grant of the patent: **13.05.2020**
(21) Application number: 18200476.2
(22) Date of filing: 15.10.2018
(51) Int. Cl.: A23B 4/052, F24C 15/18

(54) **SMOKING APPARATUS**
RÄUCHERVORRICHTUNG
APPAREIL A FUMER

(30) Priority: 19.10.2017 IT 201700118716
(43) Date of publication of application: 24.04.2019
(73) Proprietor: Angelo Po Grandi Cucine - Societa' per Azioni, 41012 Carpi (MO) (IT)
(72) Inventor: CAPRIGLIONE, Gerardo, 41012 Carpi (MO) (IT)
(74) Representative: Crugnola, Pietro

(56) References cited:
- EP-A1- 1 312 293
- US-A1- 2008 307 978
- US-A1- 2013 239 823

## Description

The invention relates to a smoking apparatus intended to being associated to a cooking apparatus, for example an oven, to smoke foods cooking in the cooking apparatus. Cooking and smoking apparatuses are known comprising a cooking chamber for containing on a plurality of planes foods to be cooked and smoked.

Such apparatuses further comprise a combustion and smoking chamber in which elements of combustible material, such as pieces of wood or coal, are burnt to produce a smoking smoke to smoke the aforesaid foods.

The combustion and smoking chamber communicates by one or more openings with an external environment from which the air is sucked to be used to burn the elements of combustible material.

The combustion and smoking chamber further comprises a connecting conduit by which the combustion and smoking chamber is connected to the cooking chamber.

From IT 01378629 a cooking and smoking apparatus is known for cooking and smoking foods that comprises a cooking chamber for containing said foods, heating means positioned in the cooking chamber, to heat said foods, a smoking chamber in which elements of combustible material such as pieces of wood or coal are burnt, to produce a smoking smoke to smoke said foods, said smoking chamber being provided with an opening through which the air taken from the external environment can be introduced into the smoking chamber, further heating means arranged in said smoking chamber to cause the combustion of said elements of combustible material and produce the smoking smoke, a connecting conduit to connect the smoking chamber to the cooking chamber and a fan, arranged in the cooking chamber and communicating with the connecting conduit, by which a vacuum can be created in the connecting conduit and in the smoking chamber, owing to which air sucked from the external environment through the opening of the smoking chamber and the smoke produced in the smoking chamber are conveyed to the connecting conduit to be sent to the cooking chamber.

The apparatus disclosed in IT 01378629 enables cooking and smoking cycles to be run, or just cooking cycles, without smoking. In order to run a cooking and smoking cycle, both the heating means of the cooking chamber and the heating means of the smoking chamber are activated. In order to run only a cooking cycle, only the heating means of the cooking chamber is activated.

The apparatus disclosed in IT 01378629 has some drawbacks. First of all, when the smoking chamber is activated fragments of the elements of combustible material may be sucked together with the smoke into the cooking chamber, thus contaminating the foods being cooked. Further, the smoking chamber is integrated into the apparatus and is not separable from the cooking chamber, which means that if a fault occurs in the heating means of the smoking chamber, or if elements of combustible material have to be provided, or the smoking chamber has to be cleaned, the entire apparatus becomes unusable for the time required to repair the fault or required for smoking chamber supply and maintenance operations.

The present invention proposes to provide a smoking apparatus that can be associated to a cooking apparatus, which does not involve the risk of introducing fragments of combustible material into the cooking apparatus, which improves the efficiency of combustion of the elements of combustible material in the smoking chamber and does not entail cooking apparatus downtime in the event of faults in the smoking chamber or smoking chamber supply and maintenance operations.

According to the present invention, a smoking apparatus is provided that comprises a smoking chamber in which elements of combustible material can be arranged, heating means to heat said elements of combustible material and cause flameless combustion thereof with generation of smoke, at least one suction opening through which air from the external environment can be sucked into said smoking chamber, characterized in that in said smoking chamber a tubular element is arranged that is provided with a plurality of openings communicating with said smoking chamber and connected to an end with an outlet conduit that can be removably connected to a combustion chamber of a cooking apparatus, said openings being distributed in a substantially uniform manner in a direction parallel to a longitudinal axis of the tubular element.

The possibility of removably connecting the outlet conduit of the smoking chamber to the cooking chamber of a cooking apparatus enables the cooking apparatus to be able to be used even when the smoking apparatus is not usable for any reason. In this case it is sufficient to disconnect the smoking apparatus from the cooking apparatus.

Further, the substantially uniform distribution of the openings on the tubular element enables the circulation of the air in the smoking chamber to be optimized, such that it is distributed almost uniformly in the mass of the elements of combustible material, enabling substantially uniform combustion to be obtained in all the zones of the smoking chamber, thus optimizing the production of smoke.

In one preferred embodiment of the present invention, said tubular element is surrounded by a protection element. The protection element prevents incandescent fragments of the combustible material being able to be sucked inside the tubular element through the openings thereof and reach the cooking chamber, contaminating the foods contained therein during the cooking step.

In a further preferred embodiment of the present invention, the heating means is provided with screening means, arranged to prevent the elements of combustible material being able to come into contact with the heating means.

Preventing the elements of combustible material coming into contact with the heating means prevents the elements of combustible material burning with rapid combustion with a fierce flame, which would lead to poor smoke production, drastically reducing the efficiency of the smoking apparatus.

In a still further preferred embodiment of the present invention, the outlet conduit of the smoking chamber is made so as to be able to rotate around a rotation axis that coincides substantially with a longitudinal axis of the tubular element. The possibility of rotating the outlet conduit makes positioning of the smoking apparatus more flexible with respect to the cooking apparatus and makes connecting the outlet conduit to the cooking apparatus easier.

Further features and advantages of the present invention are shown in the description that follows that illustrates merely by way of example an embodiment of the present invention, with reference to the attached drawings, in which:

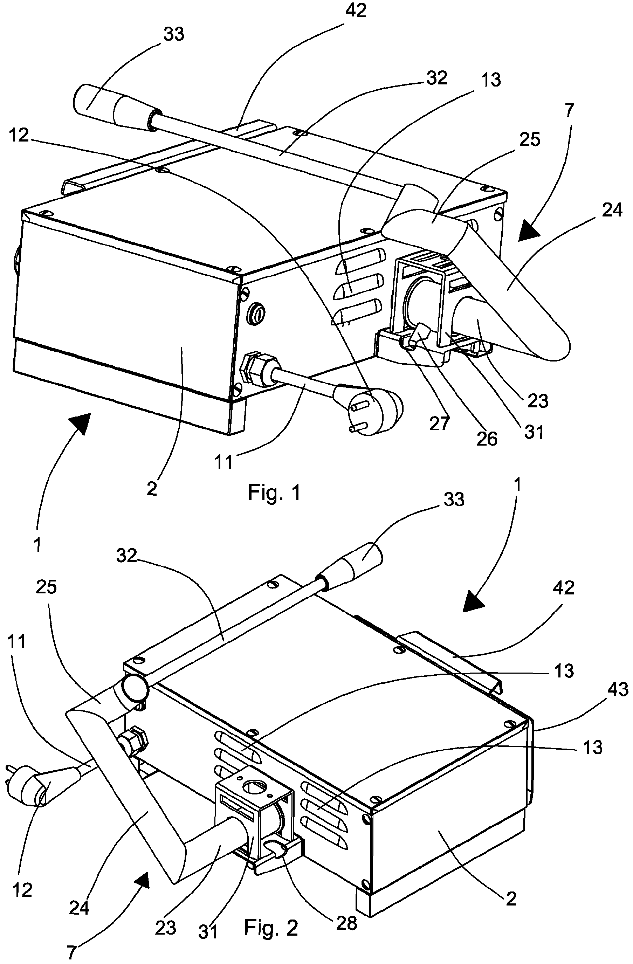

Figures 1 and 2 are prospective views of a smoking apparatus according to the invention;

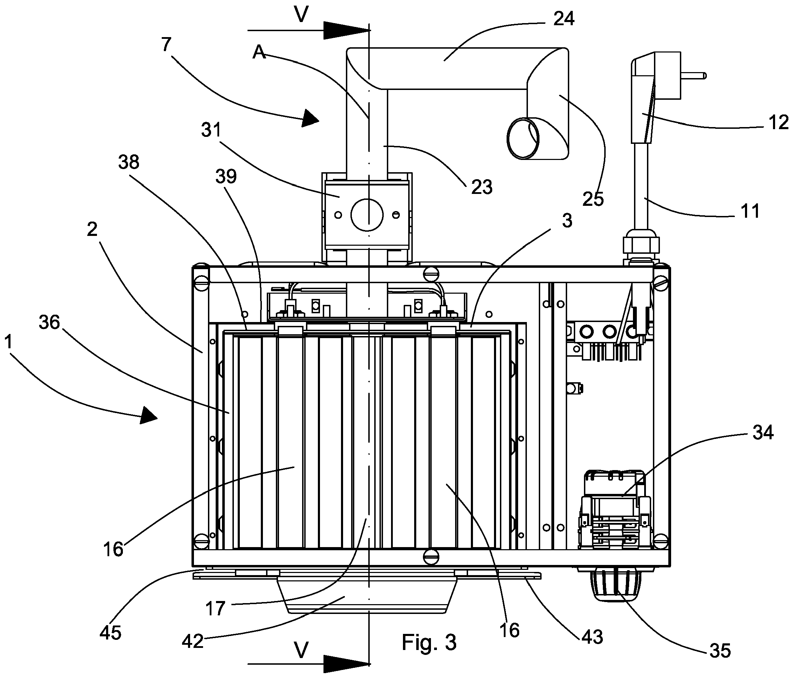

Figure 3 is a top view of the smoking apparatus according to the invention in which the inside of the apparatus is shown;
Figure 4 is a view like the one in Figure 3, in which the heating means and the tubular element have been shown;

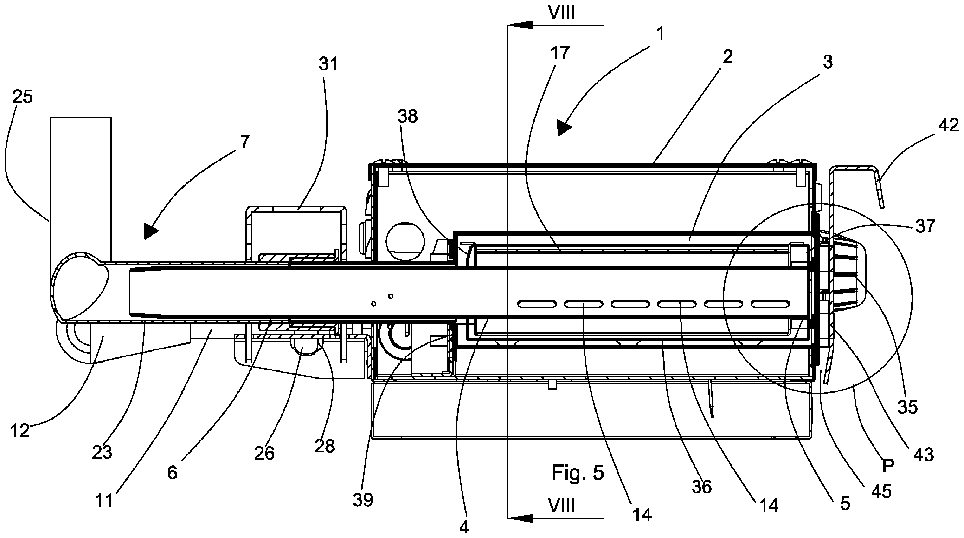

Figure 5 is the section V-V of Figure 3;
Figure 6 is a raised side view of the smoking apparatus according to the invention;
Figure 7 illustrates schematically an example of a connection of the smoking apparatus according to the invention with a cooking apparatus;
Figure 8 is the section VIII-VIII of Figure 4;
Figure 9 is an enlarged detail P of Figure 4, but relating to a variant of the apparatus according to the invention;
Figure 10 is a perspective view of a further variant of the smoking apparatus according to the invention;
Figure 11 is a raised view of the apparatus of Figure 10;
Figure 12 is an enlarged detail of the apparatus of Figure 10;
Figure 13 is the section XIII-XIII of Figure 11.

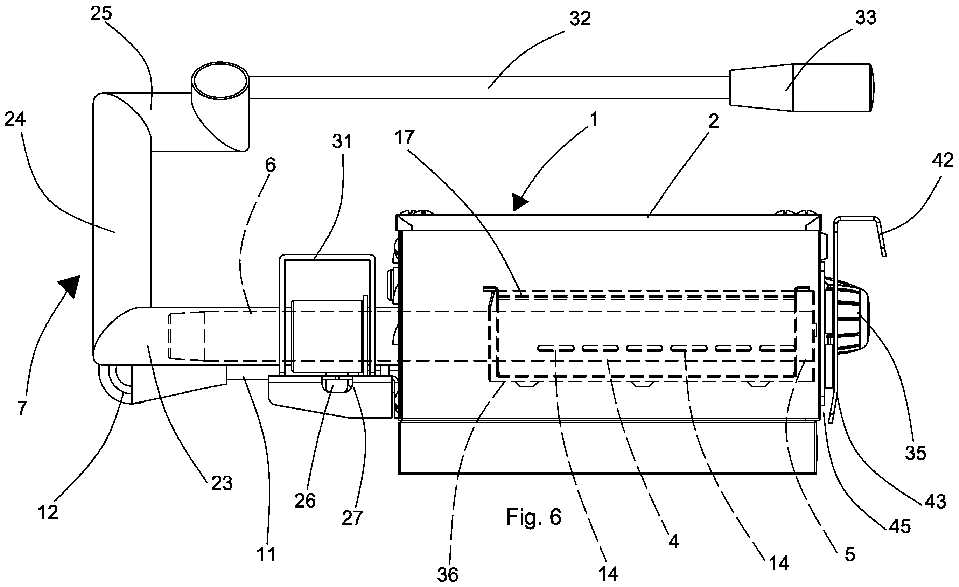

With reference to the figures, a smoking apparatus 1 according to the invention comprises a body 2, inside which a chamber 3 is defined, in which a drawer-shaped sliding element 36 is insertable in which elements of combustible material 29 (Figure 6) to be burnt to produce smoking smoke, for example small pieces of wood or coal, can be placed. The drawer-shaped sliding element 36 will be referred to below as the drawer 36 for short.

The drawer 36 is provided with a handle 42, fixed to a plate 43 connected to a first wall 37 of the drawer 36. The handle 42 can be made as single body with the plate 43.

Between the plate 43 and the first wall 37 a space 45 is defined.

The body 2 is provided with at least one first ventilation opening 13, advantageously a plurality of first ventilation openings 13, for example in the form of a slit.

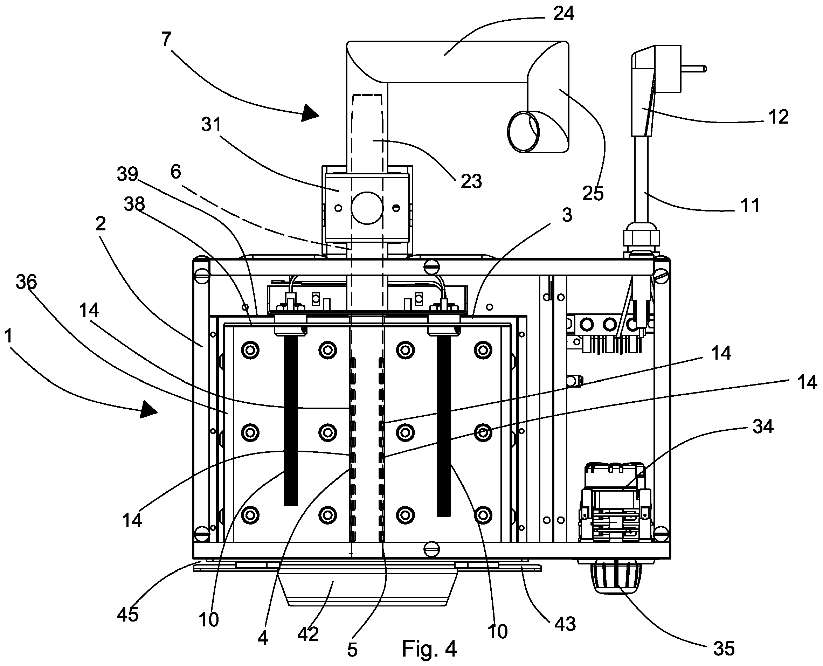

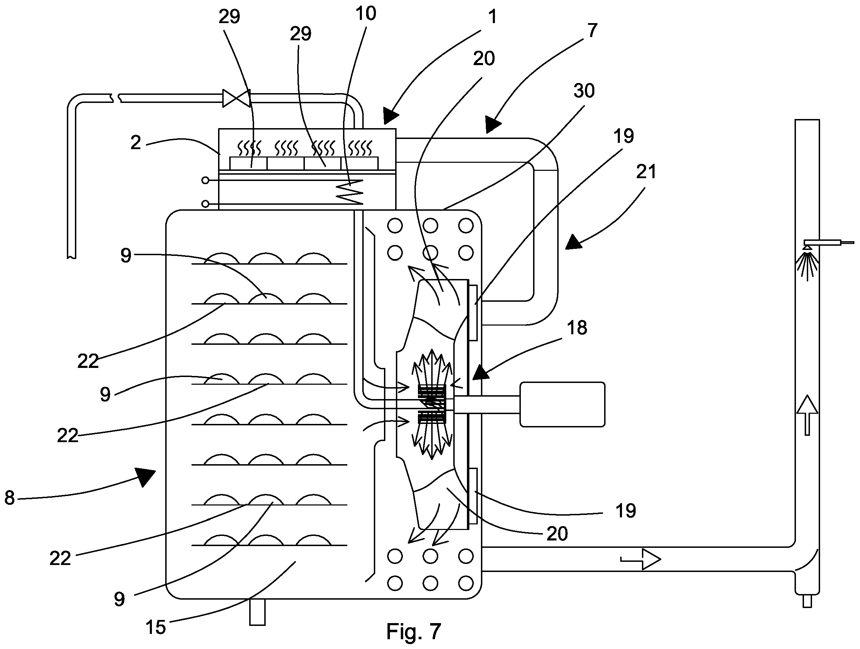

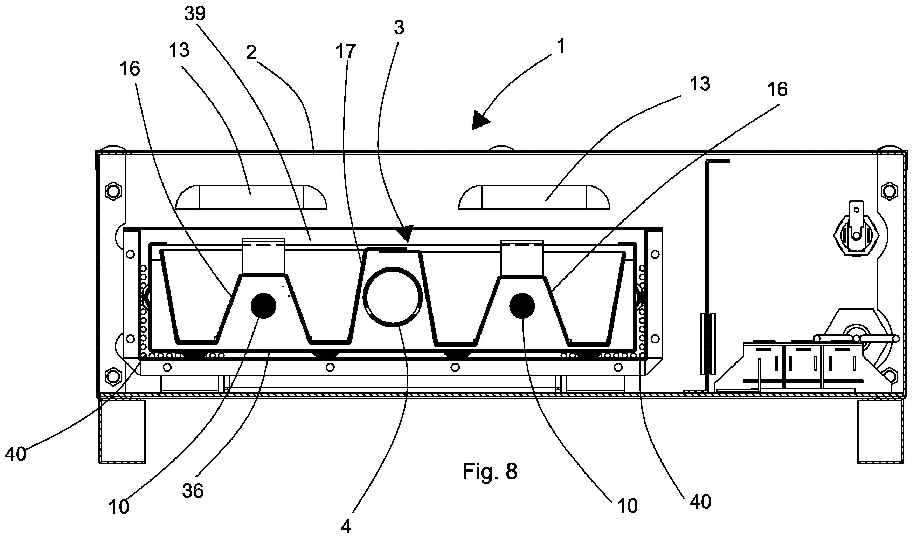

In the drawer 36, in a substantially central position, a tubular element is arranged 4 (Figure 4), a first end 5 of which is fixed to the first wall 37 of the drawer 36. A second end 6 of the tubular element 4 passes through a second wall 38 of the drawer 36, opposite said first wall 37, through a bottom wall 39 of the chamber 3 and is inserted inside an outlet conduit 7, through which the smoke produced by combustion of the elements of combustible material can be sent to a cooking apparatus 8 (Figure 7) to smoke foods 9 being cooked inside a cooking chamber 15 of the cooking apparatus 8. The cooking chamber 15 can be provided with planes 22 on which the foods 9 to be cooked and smoked can be arranged. The bottom wall 39 of the chamber 3 can be provided with a plurality of further openings 40 (Figure 8) through which the air can be delivered to the chamber 3 and to the drawer 36 to supply the oxygen necessary for the combustion of the elements of combustible material 29, as will be explained in greater detail below.

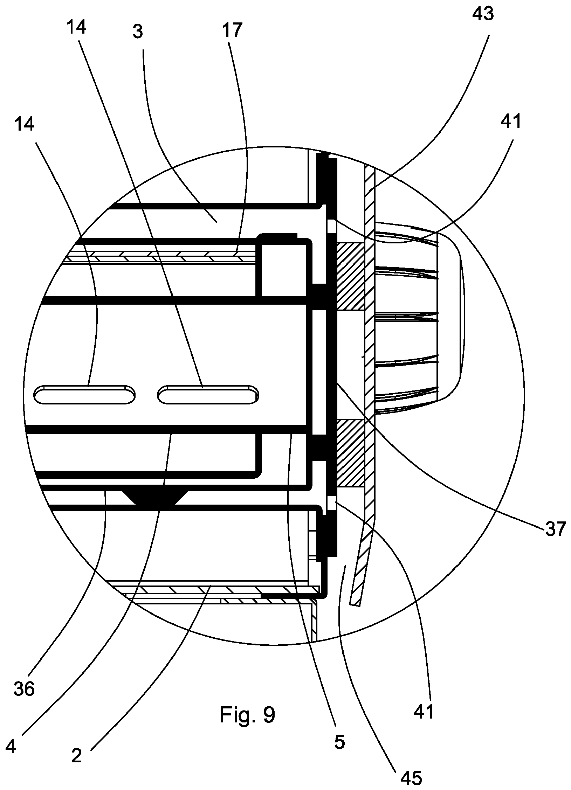

In one embodiment of the present invention, illustrated in Figure 9, the bottom wall 39 of the chamber 3 is devoid of openings and the first wall 37 of the drawer 36 is provided with a plurality of still further openings 41 through which the air necessary for the combustion of the elements of combustible material 29 can be delivered into the drawer 36.

The tubular element 4 is provided with second suction openings 14, for example in the form of slots, communicating with the inside of the drawer 36, through which air and smoke produced by combustion of the elements of combustible material can be sucked inside the tubular element 4 and sent to the outlet conduit 7 and to the cooking chamber 15 of the cooking apparatus 8.

Advantageously, the second openings 14 can be distributed in a substantially uniform manner in a direction parallel to a longitudinal axis A of the tubular element 4.

Inside the chamber 3, at least one electrical resistance 10 is arranged that is used to heat the elements of combustible material 29 to a temperature that is sufficient to cause flameless combustion thereof that causes smoke to be produced to smoke the foods 9.

The at least one electrical resistance 10 can be powered by a power cable 11 that can be connected, by a plug 12, to a source of electric power.

In the illustrated embodiment, the smoking apparatus 1 is provided with two electrical resistances 10. Nevertheless, the number of electrical resistances 10 can be different from two without thereby falling outside the scope of the present invention. For example, the number and arrangement of the electrical resistances 10 inside the chamber 3 can be chosen on the basis of the shape and dimensions of the chamber 3.

The electric power with which the electrical resistances 10 are supplied can be adjusted by an adjusting element 34, for example a rheostat, which is drivable by a knob 35.

Each electrical resistance 10 is provided with a screening element 16, for example a net element, the function of which is to avoid direct contact of the respective electrical resistance 10 with the elements of combustible material, to prevent the elements of combustible material being subjected to rapid combustion with a fierce flame, which would reduce the smoke production and thus the efficiency of the smoking apparatus.

The tubular element 4 is provided with a protection element 17 that is so arranged as to prevent particles of combustible material being sucked inside the tubular element 4 and reaching the cooking chamber 15, contaminating the foods 9 contained therein. The protection element 17 is provided with further openings for the transit of air and smoke sucked by the chamber 3 through the second suction openings 14 of the tubular element 4. Advantageously, the protection element 17 can be a net element, but can also consist, for example, of a perforated metal sheet.

In order to send the smoke produced by the combustion of the elements of combustible material 29 to the cooking chamber 15 of the cooking apparatus 8, the outlet conduit 7 can be connected to the cooking apparatus 8 at a suction section 19 of fan means 18 of the cooking apparatus 8, the delivery section 20 of which communicates with the cooking chamber 15. A connecting conduit 21 can also be provided that leads into the cooking apparatus 8 at said suction section 19 and to which the outlet conduit 7 can be connected.

Advantageously, the outlet conduit 7 is made so as to be able to be removably connected to the cooking apparatus 8, or to the connecting conduit 21.

This enables the speed of the connection of the smoking apparatus 1 according to the invention to the cooking apparatus 8, or to the connecting conduit 21 and of the disconnection from the cooking apparatus 8, or from the connecting conduit 21 to be maximized.

Driving the fan means 18 creates a vacuum in the connecting conduit 21, in the outlet conduit 7, in the tubular element 4, in the drawer 36 and in the chamber 3. This vacuum sucks air into the chamber 3 and into the drawer 36, through the first ventilation openings 13 and the further openings 40 made in the bottom wall 39 of the chamber 3, and sucking air and smoke, produced by the combustion of the elements of combustible material 29, in the tubular element 4, through the second suction openings 14, in the outlet conduit 7 and in the connecting conduit 21. The sucked air and smoke reach the suction section 19 of the fan means 18 and are sent to the delivery section 20, by which the air and smoke sucked from the chamber 3 are pushed into the cooking chamber 15 of the cooking apparatus 8, to smoke the foods 9 contained therein.

In the case of the variant of the invention illustrated in Figure 9, when the fan means 18 is driven a vacuum is created in the connecting conduit 21, in the outlet conduit 7, in the tubular element 4, in the drawer 36 and in the chamber 3. This vacuum sucks air into the chamber 3 and into the drawer 36, through the space 45 and the still further openings 41 made in the first wall 37 of the drawer 36 and sucks air and smoke, produced by the combustion of the elements of combustible material 29, in the tubular element 4, through the second suction openings 14, in the outlet conduit 7 and in the connecting conduit 21. The sucked air and smoke reach the suction section 19 of the fan means 18 and are sent to the delivery section 20, by which the air and smoke sucked from the chamber 3 are pushed into the cooking chamber 15 of the cooking apparatus 8, to smoke the foods 9 contained therein.

It should be noted that the shape, dimensions and distribution of the further openings 40 or of the still further openings 41 are chosen so as to ensure sucking of a flowrate of air sufficient to ensure flameless combustion of the elements of combustible material 29, but not permit combustion with flames, which would cause a significant reduction in the production of smoke and thus a significant decrease in the efficiency of the smoking device 1 according to the invention.

The smoking apparatus 1 according to the invention can be arranged in any position with respect to the cooking apparatus 8, for example can be arranged on the upper part 30 of the cooking apparatus 8, as illustrated in Figure 6.

In order to facilitate and make flexible the positioning of the smoking apparatus 1 according to the invention with respect to the cooking apparatus 8, the outlet conduit 7 can be provided with two or more portions that are perpendicular to one another, for example at least one first portion 23 that is coaxial with the tubular element 4 and a second portion 24 that is perpendicular to the first portion 23. Also further portions 25 can be provided that are perpendicular to one another and perpendicular to the second portion 24. It is also possible to provide for the corners between a portion of outlet conduit 7 and the portions adjacent thereto being other than 90°, and different from one another, depending on the positioning of the smoking apparatus 1 with respect to the cooking apparatus 8. Further, the portions 23, 24, 25 of the outlet conduit 7 can have a rectilinear or curvilinear axis.

It is further advantageous for the portions of the outlet conduit 7 to be able to be removably connected together so as to be able to add or remove portions to the outlet conduit 7, on the basis of the requirements for connection to the cooking apparatus 8.

Advantageously, the first portion 23 of the outlet conduit 7 is inserted into the second end 6 of the tubular element 4, which is concentric to said second end 6, so as to be able to rotate around the longitudinal axis A of the tubular element 4. This arrangement enables the outlet conduit 7 to be oriented in the best way to make the connection to the cooking apparatus 8 easier.

The first portion 23 of the outlet conduit 7 is supported by a supporting element 31, so as to be able to rotate with respect thereto, said supporting element 31 being fixed to said body 2.

The first portion 23 of the outlet conduit 7 is provided with a pin 26 that protrudes radially from the first portion 23 and which is arranged for coupling with a first seat 27 and with a second seat 28 obtained on opposite sides on the support 31. Coupling of the pin 26 with the first seat 27 or with the second seat 28 defines the stroke end positions of the rotation of the outlet conduit 7.

The outlet conduit 7 can be connected to a manoeuvring rod 32 provided with a grip 33, by which the outlet conduit 7 can be rotated.

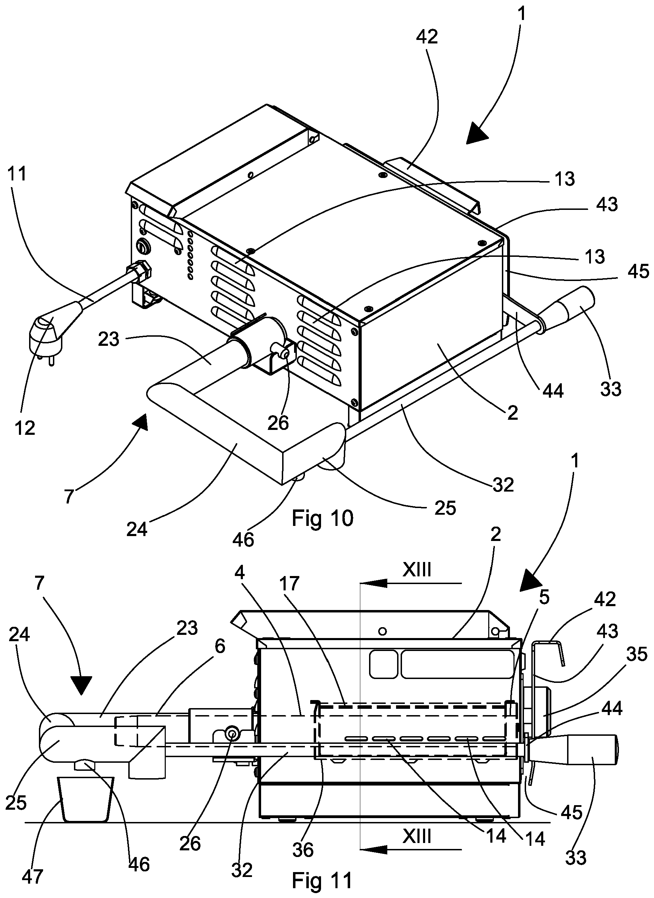

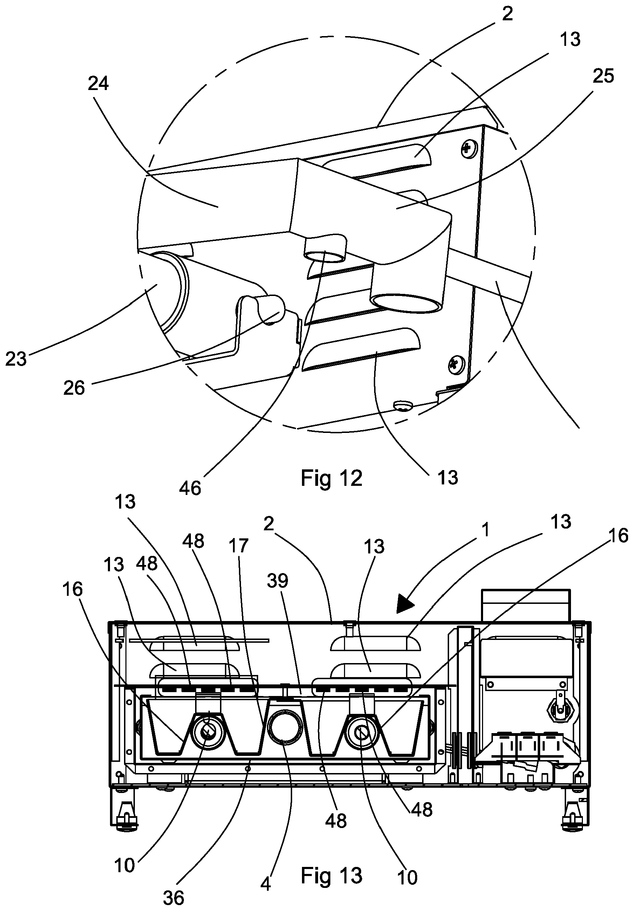

In Figures 10 to 13 a variant on the smoking apparatus 1 according to the invention is illustrated.

In this variant, the smoking apparatus is provided with a locking element 44 configured so as to lock the drawer 36, to prevent opening thereof during operation of the smoking apparatus, to prevent smoke and high-temperature elements 29 present in the drawer 36 escaping into the environment.

The locking element 44 can consist of a plate fixed in a cantilevered manner to the manoeuvring rod 32 and extending perpendicularly to the manoeuvring rod 32, said plate being configured so as to be able to be inserted into the space 45.

By rotating the manoeuvring rod 32 to the position illustrated in Figures 10 and 11, the plate 44 is inserted into the space 45, preventing the drawer 36 from opening.

The smoking apparatus 1 illustrated in Figures 10 to 13 is further provided with a condensate discharge 46 made in the further portion 25 of the outlet conduit 7. The condensate discharge can be made by making a hole in the wall of the further portion 25 and connecting a short tubular element to said hole.

The condensate discharge is used to discharge to the outside of the smoking apparatus 1 possible condensate that forms from the smoke produced during operation of the smoking apparatus 1, to prevent said condensates reaching the inside of the oven.

The condensate discharged through the discharge 46 can be collected in a receptacle 47 placed below the discharge 46.

In the smoking apparatus 1 illustrated in Figures 10 to 13 the further openings made in the bottom wall 39 of the chamber 3 have the shape of slits 48, arranged on one or more rows along the bottom wall 39. The dimensions, the number and the distribution of the slits 48 are so chosen as to ensure sucking of a flowrate of air that is sufficient to permit flameless combustion of the elements of combustible material 29, but not permit combustion with flames.

The locking element 44, the discharge 46 and the slits 48 can be present singularly or in combination between themselves in a smoking apparatus 1 according to the invention.

## Claims

1. Smoking apparatus (1) that comprises a body (2) inside which a chamber (3) is defined into which a slidable element (36) is insertable in which elements of combustible material (29) can be arranged, heating means (10) that is arranged in said slidable element (36) to heat said elements of combustible material (29) and cause flameless combustion thereof with generation of smoke, **characterized in that** in said slidable element (36) a tubular element (4) is arranged that is provided with a plurality of second suction openings (14) communicating with the inside of said slidable element (36), said tubular element (4) being connected, at a first end (5), to a first wall (37) of the slidable element (36), whereas a second end (6) thereof is inserted into an outlet conduit (7).

2. Smoking apparatus (1) according to claim 1, wherein a locking element (44) is provided that is configured so as to lock said sliding element (36).

3. Smoking apparatus (1) according to claim 1, or 2, wherein said second suction openings (14) are distributed substantially uniformly in a direction parallel to a longitudinal axis (A) of the tubular element (4).

4. Smoking apparatus (1) according to any preceding claim, wherein said tubular element (4) is provided with a protection element (17) provided with further openings, said protection element (17) being able to comprise a net or a perforated metal sheet.

5. Smoking apparatus (1) according to any preceding claim, wherein said heating means comprises an electrical resistance (10), or a plurality of electrical resistances (10), said electrical resistance (10) or each electrical resistance (10) of said plurality of electrical resistances being able to be provided with a screening element (16).

6. Smoking apparatus (1) according to any preceding claim, wherein said outlet conduit (7) can be removably connected to a cooking apparatus (8) for cooking foodstuffs (9) such as to send said smoke generated in said chamber (3) to a cooking chamber (15) of said cooking apparatus (8) in which said foodstuffs (9) are arranged, said outlet conduit (7) being able to be connected to said cooking apparatus directly or by a connecting conduit (21).

7. Smoking apparatus (1) according to any preceding claim, wherein said outlet conduit (7) comprises a first portion (23) and a second portion (24) that forms a first angle with said first portion (23), said first portion (23) being fitted concentrically on said second end (6).

8. Smoking apparatus (1) according to claim 7, wherein said outlet conduit (7) comprises at least one further portion (25) that forms a second angle with said second portion (24), or comprises a plurality of further portions (25) that form further angles between themselves and with said second portion (24).

9. Smoking apparatus (1) according to claim 8 wherein said at least one further portion (25) or a further portion of said plurality of further portions (25) is provided with a condensate discharge (46).

10. Smoking apparatus (1) according to any one of claims 7 to 9, wherein said first portion (23) and second portion (24) and said at least one further portion (25) can have a rectilinear or curvilinear axis and can be made in such a manner as to be removably connected together.

11. Smoking apparatus (1) according to any one of claims 3 to 10, wherein said outlet conduit (7) is rotatable around said longitudinal axis (A).

12. Smoking apparatus (1) according to claim 11, wherein said first portion (23) of the outlet conduit (7) is supported by a supporting element (31) so as to be able to rotate with respect thereto, said supporting element (31) being fixed to said body (2), said outlet conduit (7) being able to be provided with a pin (26) that protrudes radially from said first portion (23) and which is arranged for coupling with a first seat (27) and with a second seat (28) obtained on opposite sides on said support (31).

13. Smoking apparatus (1) according to claim 11, or 12, wherein said outlet conduit (7) can be connected to a manoeuvring rod (32) provided with a grip (33), by which the outlet conduit (7) can be rotated.

14. Smoking apparatus (1) according to claim 13, wherein said locking element comprises a plate (44) fixed in a cantilevered manner to the manoeuvring rod (32) and extending perpendicularly to the manoeuvring rod (32), said plate (44) being configured so as to be able to be inserted into a space (45) defined between said first wall (37) and a plate (43) connected to said first wall (37).

15. Smoking apparatus (1) according to any preceding claim, wherein said body (2) comprises at least one first ventilation opening (13) through which air from the outer environment can be sucked inside said body (2), a bottom wall (39) of said chamber (3) being provided with a plurality of further openings (40; 48), the number, the shape, the dimensions and the distribution of said openings (40) being chosen so as to ensure sucking of a flowrate of air that is sufficient to permit flameless combustion of the elements of combustible material (29), but not permit combustion with flames.

16. Smoking apparatus (1) according to any one of claims 1 to 14, wherein said body (2) comprises at least one first ventilation opening (13) through which air from the outer environment can be sucked inside said body (2) and said first wall (37) of said sliding element (36) is provided with a plurality of still further openings (41), the number, the shape, the dimensions and the distribution of said still further openings (41) being chosen so as to ensure sucking of a flowrate of air sufficient to ensure flameless combustion of the elements of combustible material (29), but not permit combustion with flames.

## Patentansprüche

1. Räuchervorrichtung (1), die einen Körper (2) aufweist, innerhalb dessen eine Kammer (3) definiert ist, in die ein verschiebbares Element (36) einführbar ist, in der Elemente aus brennbarem Material (29) angeordnet sein können, wobei ein Heizmittel (10) in dem verschiebbaren Element (36) angeordnet ist, um die Elemente aus brennbarem Material (29) zu heizen und um eine flammenlose Verbrennung davon unter Erzeugung von Rauch zu bewirken, **dadurch gekennzeichnet, dass** in dem verschiebbaren Element (36) ein rohrförmiges Element (4) angeordnet ist, das mit einer Mehrzahl von zweiten Saugöffnungen (14) versehen ist, die mit der Innenseite des verschiebbaren Elementes (36) in Verbindung stehen, wobei das rohrförmige Element (4) an einem ersten Ende mit einer ersten Wand (37) des verschiebbaren Elements (36) verbunden ist, während ein zweites Ende (6) davon in einen Auslasskanal (7) einführbar ist.

2. Räuchervorrichtung (1) nach Anspruch 1, bei der ein Verriegelungselement (44) vorgesehen ist, das dazu ausgebildet ist, das verschiebbare Element (36) zu verriegeln.

3. Räuchervorrichtung (1) nach Anspruch 1 oder 2, bei der die zweiten Saugöffnungen (14) im Wesentlichen gleichförmig in einer Richtung parallel zu einer Längsachse (A) des rohrförmigen Elementes (4) angeordnet sind.

4. Räuchervorrichtung (1) nach irgendeinem vorhergehenden Anspruch, bei der das rohrförmige Element (4) mit einem Schutzelement (17) versehen ist, das mit weiteren Öffnungen versehen ist, wobei das Schutzelement (17) ein Netz oder eine perforierte Metallfolie aufweisen kann.

5. Räuchervorrichtung (1) nach irgendeinem vorhergehenden Anspruch, bei der das Heizelement einen elektrischen Widerstand (10) oder eine Mehrzahl von elektrischen Widerständen (10) aufweist, wobei der elektrische Widerstand (10) oder jeder elektrische Widerstand (10) der Mehrzahl von elektrischen Widerständen in der Lage ist, mit einem Gitterelement (16) versehen zu werden.

6. Räuchervorrichtung (1) nach irgendeinem vorhergehenden Anspruch, bei der der Auslasskanal (7) abnehmbar mit einer Kochvorrichtung (8) zum Kochen von Lebensmitteln (9) verbunden sein kann, um so in der Kammer (3) erzeugten Rauch zu einer Kochkammer (15) der Kochvorrichtung (8) zu senden, in der Lebensmittel (9) angeordnet sind, wobei der Auslasskanal (7) mit der Kochvorrichtung direkt oder durch ein Verbindungskanal (21) verbunden sein kann.

7. Räuchervorrichtung (1) nach irgendeinem vorhergehenden Anspruch, bei der der Auslasskanal (7) einen ersten Bereich (23) und einen zweiten Bereich (24) aufweist, der einen ersten Winkel mit dem ersten Bereich (23) bildet, wobei der erste Bereich (23) konzentrisch auf dem zweiten Ende (6) angeordnet ist.

8. Räuchervorrichtung (1) nach Anspruch 7, bei der der Auslasskanal (7) wenigstens einen weiteren Bereich (25) aufweist, der einen zweiten Winkel mit dem zweiten Bereich (24) bildet, oder der eine Mehrzahl von weiteren Bereichen (25) aufweist, die weitere Winkel dazwischen und mit dem zweiten Bereich (24) bilden.

9. Räuchervorrichtung (1) nach Anspruch 8, bei der der wenigstens eine weitere Bereich (25) oder ein weiterer Bereich der Mehrzahl von weiteren Bereichen (25) mit einem Kondensatauslass (46) versehen ist.

10. Räuchervorrichtung (1) nach irgendeinem der Ansprüche 7 bis 9, bei der der erste Bereich (23) und ein zweiter Bereich (24) und der wenigstens eine weitere Bereich (25) eine geradlinige oder eine gekrümmte Achse haben können, die auf eine solche Weise hergestellt ist, dass sie lösbar miteinander verbunden sind.

11. Räuchervorrichtung (1) nach irgendeinem der Ansprüche 3 bis 10, bei der der äußere Kanal (7) um die Längsachse (A) drehbar ist.

12. Räuchervorrichtung (1) nach Anspruch 11, bei der der erste Bereich (23) des Auslasskanals (7) von einem Stützelement (31) gehalten ist, um so in Bezug darauf drehbar zu sein, wobei das Stützelement (31) an dem Körper (2) befestigt ist, wobei der Auslasskanal (7) mit einem Stift (26) versehen sein kann, der radial von dem ersten Bereich (23) hervorsteht und der dazu ausgebildet ist, mit einem ersten Sitz (27) und mit einem zweiten Sitz (28) zu koppeln, die auf gegenüberliegenden Seiten des Stützelementes (31) angeordnet sind.

13. Räuchervorrichtung (1) nach Anspruch 11 oder 12, bei welcher der Auslasskanal (7) mit einem Handhabungsstab (32) verbunden sein kann, der mit einem Griff (33) versehen ist, wodurch der Auslasskanal (7) gedreht werden kann.

14. Räuchervorrichtung (1) nach Anspruch 13, bei der das Verriegelungselement eine Platte (44) aufweist, die in einer hervorstehenden Weise an einem Handhabungsstab (32) befestigt ist und sich senkrecht zu dem Handhabungsstab (32) erstreckt, wobei die Platte (44) so ausgebildet ist, dass sie in einen Raum (45) zwischen der ersten Wand (37) und einer Platte (43), die mit der ersten Wand (37) verbunden ist, eingeführt werden kann.

15. Räuchervorrichtung (1) nach irgendeinem vorhergehenden Anspruch, bei der der Körper (2) wenigstens eine erste Ventilationsöffnung (13) aufweist, durch die Luft von der Außenumgebung in den Körper (2) angesaugt werden kann, wobei eine Bodenwand (39) der Kammer (3) mit einer Mehrzahl von weiteren Öffnungen (40; 48) versehen ist, wobei die Anzahl, die Form, die Dimensionen und die Verteilung der Öffnungen (40) so ausgewählt sind, dass sie ein Ansaugen mit einer Flussrate von Luft sicherstellen, die ausreichend ist, um eine flammenlose Verbrennung der Elemente aus brennbarem Material (29) erlauben, jedoch keine Verbrennung mit Flammen zu erlauben.

16. Räuchervorrichtung (1) nach irgendeinem der Ansprüche 1 bis 14, bei der der Körper (2) wenigstens eine erste Ventilationsöffnung (13) aufweist, durch die Luft von der äußeren Umgebung in den Körper (2) angesaugt werden kann, und wobei die erste Wand (37) des verschiebbaren Elementes (36) mit einer Mehrzahl von noch weiteren Öffnungen (41) versehen ist, wobei die Anzahl, die Form, die Dimensionen und die Verteilung der noch weiteren Öffnung (41) so ausgewählt sind, dass sie das Ansaugen einer Flussrate von Verbrennungsluft sicherstellen, um eine flammenlose Verbrennung der Elemente aus brennbarem Material (29) zu gewährleisten, jedoch keine Verbrennung mit Flammen zu erlauben.

## Revendications

1. Appareil à fumer (1) qui comprend un corps (2) à l'intérieur duquel est définie une chambre (3) dans laquelle peut être inséré un élément coulissant (36) dans lequel des éléments de matériau combustible (29) peuvent être disposés, des moyens de chauffage (10) qui sont disposés dans ledit élément coulissant (36) pour chauffer lesdits éléments de matériau combustible (29) et causer une combustion sans flamme de ceux-ci avec production de fumée, **caractérisé en ce que** dans ledit élément coulissant (36) est disposé un élément tubulaire (4) qui est pourvu d'une pluralité de deuxième ouvertures d'aspiration (14) communiquant avec l'intérieur dudit élément coulissant (36), ledit élément tubulaire (4) étant relié, à une première extrémité (5), à une première paroi (37) de l'élément coulissant (36), tandis qu'une deuxième extrémité (6) de l'élément tubulaire (4) est insérée dans un conduit de sortie (7).

2. Appareil à fumer (1) selon la revendication 1, dans lequel il est prévu un élément de verrouillage (44) qui est configuré de manière à verrouiller ledit élément coulissant (36).

3. Appareil à fumer (1) selon la revendication 1 ou 2, dans lequel lesdites deuxièmes ouvertures d'aspiration (14) sont réparties sensiblement uniformément dans une direction parallèle à un axe longitudinal (A) de l'élément tubulaire (4).

4. Appareil à fumer (1) selon l'une quelconque des revendications précédentes, dans lequel ledit élément tubulaire (4) est pourvu d'un élément de protection (17) pourvu d'ouvertures supplémentaires, ledit élément de protection (17) pouvant comprendre un filet ou une feuille de métal perforée.

5. Appareil à fumer (1) selon l'une quelconque des revendications précédentes, dans lequel lesdits moyens de chauffage comprennent une résistance électrique (10) ou une pluralité de résistances électriques (10), ladite résistance électrique (10) ou chaque résistance électrique (10) de ladite pluralité de résistances électriques pouvant être pourvue d'un élément faisant écran (16).

6. Appareil à fumer (1) selon l'une quelconque des revendications précédentes, dans lequel ledit conduit de sortie (7) peut être relié de manière amovible à un appareil de cuisson (8) pour la cuisson de denrées alimentaires (9) de manière à envoyer ladite fumée produite dans ladite chambre (3) vers une chambre de cuisson (15) dudit appareil de cuisson (8) dans lequel sont disposées lesdites denrées alimentaires (9), ledit conduit de sortie (7) pouvant être relié audit appareil de cuisson directement ou par un conduit de liaison (21).

7. Appareil à fumer (1) selon l'une quelconque des revendications précédentes, dans lequel ledit conduit de sortie (7) comprend une première partie (23) et une deuxième partie (24) qui forme un premier angle avec ladite première partie (23), ladite première partie (23) étant montée concentriquement sur ladite deuxième extrémité (6).

8. Appareil à fumer (1) selon la revendication 7, dans lequel ledit conduit de sortie (7) comprend au moins une partie supplémentaire (25) qui forme un deuxième angle avec ladite deuxième partie (24), ou comprend une pluralité de parties supplémentaires (25) qui forment des angles supplémentaires entre eux-mêmes et avec ladite deuxième partie (24).

9. Appareil à fumer (1) selon la revendication 8, dans lequel ladite au moins une partie supplémentaire (25) ou une partie supplémentaire de ladite pluralité de parties supplémentaires (25) est pourvue d'une évacuation de condensation (46).

10. Appareil à fumer (1) selon l'une quelconque des revendications 7 à 9, dans lequel lesdites première partie (23) et deuxième partie (24) et ladite au moins une partie supplémentaire (25) peuvent avoir un axe rectiligne ou curviligne et peuvent être faites de manière à être reliées de manière amovible entre elles.

11. Appareil à fumer (1) selon l'une quelconque des revendications 3 à 10, dans lequel ledit conduit de sortie (7) est apte à tourner autour dudit axe longitudinal (A).

12. Appareil à fumer (1) selon la revendication 11, dans lequel ladite première partie (23) dudit conduit de sortie (7) est supportée par un élément de support (31) de manière à pouvoir tourner par rapport à celui-ci, ledit élément de support (31) étant fixé audit corps (2), ledit conduit de sortie (7) pouvant être pourvu d'une tige (26) qui dépasse radialement de ladite première partie (23) et qui est disposée pour être couplée à un premier appui (27) et à un deuxième appui (28) obtenus sur des côtés opposés sur ledit support (31).

13. Appareil à fumer (1) selon la revendication 11 ou 12, dans lequel ledit conduit de sortie (7) peut être relié à une barre de manœuvre (32) pourvue d'une poignée (33) par laquelle le conduit de sortie (7) peut être tourné.

14. Appareil à fumer (1) selon la revendication 13, dans lequel ledit élément de verrouillage comprend une plaque (44) fixée en porte-à-faux à la barre de manœuvre (32) et s'étendant perpendiculairement à la barre de manœuvre (32), ladite plaque (44) étant configurée de manière à pouvoir être insérée dans un espace (45) défini entre ladite première paroi (37) et une plaque (43) reliée à ladite première paroi (37).

15. Appareil à fumer (1) selon l'une quelconque des revendications précédentes, dans lequel ledit corps (2) comprend au moins une première ouverture de ventilation (13) par laquelle de l'air venant de l'environnement extérieur peut être aspiré à l'intérieur dudit corps (2), une paroi inférieure (39) de ladite chambre (3) étant pourvue d'une pluralité d'ouvertures supplémentaires (40 ; 48), le nombre, la forme, les dimensions et la répartition desdites ouvertures (40) étant choisis de manière à assurer une aspiration d'un débit d'air qui soit suffisant pour permettre une combustion sans flamme des éléments du matériau combustible (29), mais pour ne pas permettre de combustion avec des flammes.

16. Appareil à fumer (1) selon l'une quelconque des revendications 1 à 14, dans lequel ledit corps (2) comprend au moins une première ouverture de ventilation (13) par laquelle de l'air venant de l'environnement extérieur peut être aspiré à l'intérieur dudit corps (2), et ladite première paroi (37) dudit élément coulissant (36) est encore pourvue d'une pluralité d'ouvertures supplémentaires (41), le nombre, la forme, les dimensions et la répartition desdites ouvertures supplémentaires (41) étant choisis de manière à assurer une aspiration d'un débit d'air suffisant pour permettre une combustion sans flamme des éléments du matériau combustible (29), mais pour ne pas permettre de combustion avec des flammes.
